# EUROPÄISCHE PATENTSCHRIFT

(11) **EP 3 559 417 B1**
(45) Veröffentlichungstag und Bekanntmachung des Hinweises auf die Patenterteilung: **16.09.2020**
(21) Anmeldenummer: 17816815.9
(22) Anmeldetag: 15.12.2017
(51) Int. Cl.: F01D 5/28, F03D 1/06, B29C 70/32, B29C 53/62, B29D 99/00, B64C 27/473, B29L 31/08, B29C 53/58

(54) **VERFAHREN ZUM HERSTELLEN EINES WINDENERGIEANLAGEN-ROTORBLATTES UND WINDENERGIEANLAGEN-ROTORBLATT**
METHOD FOR PRODUCING A WIND TURBINE ROTOR BLADE, AND WIND TURBINE ROTOR BLADE
PROCÉDÉ DE FABRICATION D'UNE PALE DE ROTOR D'ÉOLIENNE ET PALE DE ROTOR D'ÉOLIENNE

(30) Priorität: 22.12.2016 DE 102016125452
(43) Veröffentlichungstag der Anmeldung: 30.10.2019
(73) Patentinhaber: Wobben Properties GmbH, 26607 Aurich (DE)
(72) Erfinder: BÜRKNER, Falko, 28757 Bremen (DE)
(74) Vertreter: Eisenführ Speiser
(86) Internationale Anmeldenummer: PCT/EP2017/083004
(87) Internationale Veröffentlichungsnummer: WO 2018/114659

(56) Entgegenhaltungen:
- WO-A1-2014/072120
- DE-A1- 19 906 618

## Beschreibung

Die vorliegende Erfindung betrifft ein Verfahren zum Herstellen eines Windenergieanlagen-Rotorblattes sowie ein Windenergieanlagen-Rotorblatt.

US 2007/0253824 A1 zeigt ein modulares Rotorblatt einer Windenergieanlage. Das Rotorblatt ist zweiteilig ausgestaltet und weist einen Innenblattabschnitt sowie einen Außenblattabschnitt auf. Der Innenblattabschnitt und der Außenblattabschnitt sind mittels eines Verbindungselementes aneinander oder miteinander befestigbar. Durch die mehrteilige Ausgestaltung des Rotorblattes kann der Transport des Rotorblattes erheblich vereinfacht werden. Die Verbindung des Innenblattabschnittes und des Außenblattabschnittes erfolgt durch eine Vakuuminfusion. Eine Vakuuminfusion an dieser Stelle ist jedoch schwierig und zeitaufwendig.

In der prioritätsbegründenden deutschen Patentanmeldung hat das Deutsche Patent- und Markenamt die folgenden Dokumente recherchiert: US 2007/0253825 A1, DE 32 39 804 A1, DE 10 2008 055 513 B4 und US 2014/0169978 A1. Windenergieanlagen-Rotorblätter ind weiters aus WO 2014072120 A1 bekannt.

Es ist daher eine Aufgabe der vorliegenden Erfindung ein Windenergieanlagen-Rotorblatt vorzusehen, welches mehrteilig ausgestaltet ist und die oben angeführten Nachteile zumindest teilweise behebt. Insbesondere ist eine Aufgabe der vorliegenden Erfindung ein Windenergieanlagen-Rotorblatt vorzusehen, welches mehrteilig ausgestaltet ist und über eine verbesserte Verbindung zwischen den jeweiligen Teilen verfügt.

Diese Aufgabe wird durch ein Verfahren zum Herstellen eines Windenergieanlagen-Rotorblattes gemäß Anspruch 1 sowie durch ein Windenergieanlagen-Rotorblatt nach Anspruch 3 gelöst.

Somit wird ein Verfahren zum Herstellen eines Windenergieanlagen-Rotorblattes vorgesehen. Das Windenergieanlagen-Rotorblatt weist mindestens einen Innenblattabschnitt und einen Außenblattabschnitt sowie ein Verbindungselement auf. Der Innenblattabschnitt wird auf einer Wickelform gewickelt, welche einen ersten und zweiten Wickelabschnitt aufweist. Der erste und zweite Wickelabschnitt sind über eine Schraubverbindung aneinander lösbar befestigt. Der zweite Wickelabschnitt ist konisch ausgestaltet, so dass nach dem Wickeln des Innenblattabschnittes eine Hülse an einem Ende des Innenblattschnittes entsteht.

Gemäß der vorliegenden Erfindung wird das Verbindungselement auf einer Wickelform gewickelt. Das Verbindungselement weist einen ersten und zweiten Abschnitt auf.

Gemäß der vorliegenden Erfindung wird eine Form mit einer konischen Innenform auf den ersten Abschnitt des Verbindungselementes aufgeschoben, bevor das Wickellaminat ausgehärtet ist, um einen konisch ausgestalteten ersten Abschnitt mit einer glatten Oberfläche vorzusehen.

Gemäß einem weiteren Aspekt der vorliegenden Erfindung kann der mindestens eine Innenabschnitt und der mindestens eine Außenabschnitt über das Verbindungselement miteinander verklebt oder miteinander lösbar verbunden werden.

Die Erfindung betrifft ebenfalls ein Windenergieanlagen-Rotorblatt mit einem Innenblattabschnitt, einem Außenblattabschnitt und einem Verbindungselement zum Verbinden des Innen- und Außenblattabschnittes. Der Innenblattabschnitt weist eine Hülse an einem ersten Ende auf, welche durch Wickeln des Innenblattabschnittes erreicht wird. Der mindestens eine Innenblattabschnitt und der mindestens eine Außenblattabschnitt können durch eine Schraubverbindung miteinander befestigt werden, so dass der Innenblattabschnitt über das Verbindungselement an dem Außenblattabschnitt befestigt ist.

Gemäß der vorliegenden Erfindung weist der Innenblattabschnitt mindestens einen angeklebten ersten Steg auf. Das Verbindungselement wird mit seinem ersten Ende, welches einen zweiten eingeklebten Steg aufweist, in die Hülsen des Innenblattabschnitts eingeführt. Das zweite Ende des Verbindungselementes wird in einem Ende des Außenblattabschnittes eingeklebt. Das Windenergieanlagen-Rotorblatt ist mindestens zweiteilig ausgestaltet und weist einen Innenblattabschnitt und einen Außenblattabschnitt auf. Der Innenblattabschnitt weist beispielsweise die Rotorblattwurzel auf und wird an einer Nabe der Windenergieanlage befestigt. An einem gegenüberliegenden Ende weist der Innenblattabschnitt eine Aufnahmeeinheit bzw. Hülse auf, in welche ein Verbindungselement teilweise eingeführt werden kann. Das Rotorblatt weist ferner einen Außenblattabschnitt auf, welcher mittels des Verbindungselementes an dem Innenblattabschnitt befestigt werden kann.

Mit dem erfindungsgemäßen Windenergieanlagen-Rotorblatt können aufwändige Fräsarbeiten auf beiden Seiten der Blatttrennstelle vermieden werden. Ferner können aufwändige Flanschlaminate im Bereich des Außenblattes vermieden werden.

Gemäß einem Aspekt der vorliegenden Erfindung kann die Blatttrennstelle auch nach außen verschoben werden. Damit kann eine bessere Aufteilung der Transporteinheiten ermöglicht werden. Ferner kann eine kostengünstige Innenblattfertigung durch das Wickellaminat ausgeweitet werden. Des Weiteren kann eine schnellere Montage auf der Baustelle ermöglicht werden. Schließlich kann auch eine Vermeidung einer Profilaufdickung wie bei einem klassischen Querbolzenanschluss vermieden werden.

Gemäß einem Aspekt der vorliegenden Erfindung ist eine Kontaktebene zwischen der Hülle des Innenblattabschnittes und dem Steckkörper (Verbindungselement) mit einem bestimmten Winkel konisch gestaltet, um ein sauberes Zusammenfügen und Trennen der Verbindung zu ermöglichen. Hierdurch kann ein Spalt zwischen dem Innenblatt und dem Außenblatt definiert werden. Dies betrifft die Position der Blattteile in Längsrichtung nach dem Zusammenstecken und Verspannen. Ferner kann der Querschnitt der Kontaktebene nicht rund sondern beispielsweise elliptisch ausgestaltet sein, um auch Torsionslasten verbessert übertragen zu können, ohne sich nur auf Reibungskräfte verlassen zu müssen. Ferner kann die Kontaktebene so ausgestaltet sein, dass nur zwei Bereiche am Anfang und am Ende in Längsrichtung Kontakt haben. Dadurch kann eine Lastabtragung definierter und vorhersehbarer erfolgen. Die Bereiche von hoher Genauigkeit werden reduziert und die Klemmwirkung durch die Vorspannung wird erhöht. Durch die präzise Formgebung der Hülse durch eine präzise gefertigte Wickelform kann erreicht werden, dass die Flächen die gewünschte Form aufweisen, ohne nachfräsen zu müssen.

Die präzise Formgebung des Steckkörpers (Verbindungselement) kann durch eine präzise gefertigte Negativform erreicht werden, welche auf das frisch gewickelte und noch nicht ausgehärtete Wickellaminat geschoben wird, ohne die Fläche nach dem Aushärten in die gewünschte Form fräsen zu müssen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt einen schematischen Querschnitt eines Innenblattabschnittes während seiner Herstellung,
- Fig. 3: zeigt eine schematische Schnittansicht eines Verbindungselementes bei seiner Herstellung,
- Fig. 4: zeigt eine schematische Schnittansicht eines Verbindungselementes während seiner Herstellung,
- Fig. 5: zeigt eine schematische Schnittansicht eines Ausschnittes eines Windenergieanlagen-Rotorblattes,
- Fig. 6: zeigt eine schematische Schnittansicht eines Innenblattabschnittes während seiner Herstellung,
- Fig. 7: zeigt eine schematische Schnittansicht eines Innenblattabschnittes während seiner Herstellung,

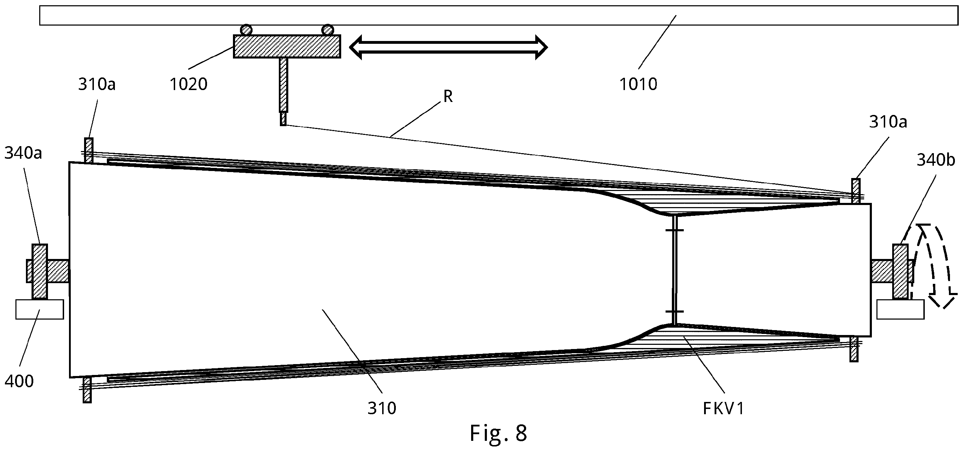

- Fig. 8: zeigt eine schematische Schnittansicht eines Innenblattabschnittes während seiner Herstellung,
- Fig. 9: zeigt eine schematische Schnittansicht eines Innenblattabschnittes während seiner Herstellung,
- Fig. 10: zeigt eine schematische Schnittansicht des Verbindungselementes während seiner Herstellung,
- Fig. 11: zeigt eine weitere schematische Schnittansicht eines Verbindungselementes während seiner Herstellung, und
- Fig. 12: zeigt eine weitere schematische Schnittansicht eines Verbindungselementes während seiner Herstellung.

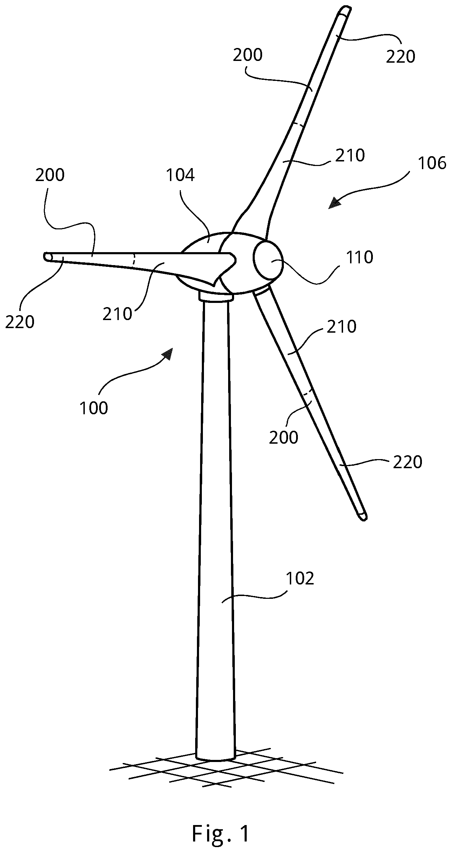

Fig. 1 zeigt eine schematische Darstellung einer Windenergieanlage. Die Windenergieanlage 100 weist einen Turm 102 und eine Gondel 104 auf. An der Gondel 104 ist ein Rotor 106 mit drei Rotorblättern 200 und einem Spinner 110 vorgesehen. Der Rotor 106 wird in Betrieb durch den Wind in eine Drehbewegung versetzt und treibt einen Generator in der Gondel 104 an, um elektrische Energie zu erzeugen.

Die Rotorblätter 200 weisen zumindest zwei Teile, nämlich einen Innenblattabschnitt 210 und einen Außenblattabschnitt 220 auf. Der Außenblattabschnitt 220 ist an dem Innenblattabschnitt 210 befestigt.

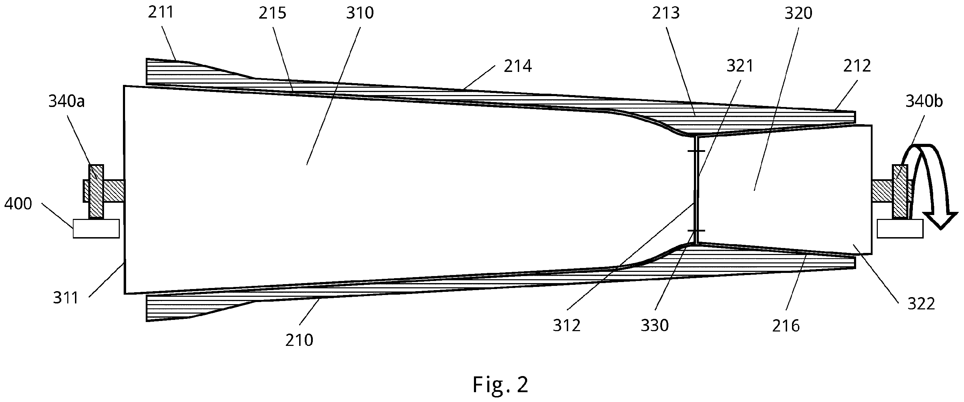

Fig. 2 zeigt eine schematische Schnittansicht eines Innenblattabschnittes während seiner Herstellung. Der Innenblattabschnitt 210 wird gemäß der Erfindung gewickelt. Hierzu wird ein Wickelkern 300 mit einer ersten Wickelform 310 und einer zweiten Wickelform 320 vorgesehen, welche über eine Schnittstelle 330 miteinander bzw. aneinander befestigt sind. Der erste Wickelformabschnitt 310 ist über ein Lager 340a und der zweite Wickelformabschnitt 320 ist über ein weiteres Lager 340b gelagert, so dass sich die Wickelform 300 drehen kann.

Der erste Wickelabschnitt 320 weist ein erstes Ende 311 und ein zweites Ende 312 auf. Das erste Ende 311 ist mit dem Lager 340a gekoppelt. Das zweite Ende 312 ist über die Verbindungsschnittstelle 330 an einem ersten Ende 321 des zweiten Wickelabschnittes 320 gekoppelt. Beispielsweise kann der erste und zweite Wickelabschnitt 310, 320 über eine Schraubverbindung lösbar aneinander befestigt werden. Optional kann der Durchmesser des ersten Wickelabschnittes 310 von dem ersten Ende 311 zu dem zweiten Ende 312 abnehmen. Der Durchmesser des zweiten Wickelabschnittes 320 kann von dem ersten Ende 321 zu dem zweiten Ende 322 zunehmen. Somit kann die Wickelform 300 im Bereich der Schnittstelle 330 den geringsten Durchmesser aufweisen. Durch diese Ausgestaltung der Wickeleinheit 300 kann erreicht werden, dass ein Innenblattabschnitt mit einer Hinterschneidung 213 hergestellt werden kann.

Auf die Wickelform 310, 320 werden Faserverbund Gelege gewickelt. Nachdem der Innenblattabschnitt 210 hergestellt worden ist, kann die Schraubverbindung im Bereich der Schnittstelle 330 gelöst werden und der erste und zweite Wickelabschnitt 310, 320 kann herausgelöst werden, so dass lediglich der Innenblattabschnitt 210 insbesondere mit der Hinterschneidung 213 übrig bleibt. Der Innenblattabschnitt 210 weist ein erstes Ende 211 und ein zweites Ende 212 auf. Im Bereich des ersten Endes 211 kann eine Verdickung des Wickelmaterials bzw. eine Flanschaufdickung für eine Querbolzenverbindung (z. B. zu der Rotornabe) vorgesehen sein.

Der zweite Wickelabschnitt 320 kann als eine Hülsenform vorgesehen sein, um eine Hülse im Bereich des zweiten Endes 212 des Innenblattabschnittes vorzusehen. Diese Hülse dient insbesondere dazu, ein Ende des Verbindungselementes aufzunehmen.

Gemäß einem Aspekt der vorliegenden Erfindung kann der erste und zweite Wickelabschnitt 310, 320 aus einem Metall wie beispielsweise Stahl hergestellt sein. Dies ist insbesondere vorteilhaft, weil somit eine glatte Oberfläche des ersten und zweiten Wickelabschnittes 310, 320 erreicht werden kann. Insbesondere durch die glatte Oberfläche des ersten und/oder zweiten Wickelabschnittes 320 kann eine glatte Innenfläche 215, 216 und insbesondere ein Hülsenabschnitt im Bereich des zweiten Endes 212 des Innenblattabschnittes erreicht werden, welcher ebenfalls glatt ist.

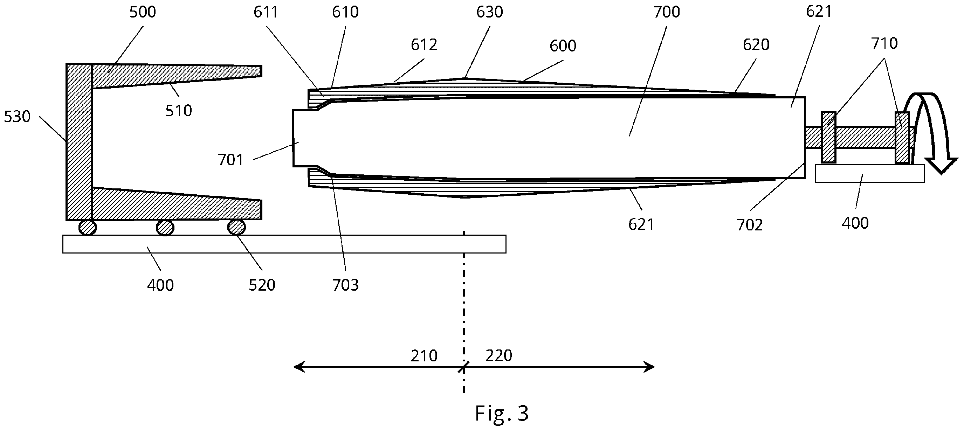

Fig. 3 zeigt eine schematische Schnittansicht eines Verbindungselementes bei seiner Herstellung. Zur Herstellung eines Verbindungselementes 600, welches beispielsweise als Verbindungsbalken ausgestaltet sein kann, wird eine Wickelform 700 vorgesehen. Die Wickelform 700 weist ein erstes und zweites Ende 701, 702 sowie einen Übergangsabschnitt 703 auf. Im Bereich zwischen dem Übergang des ersten Endes 701 und dem Übergangsbereich 703 vergrößert sich der Außendurchmesser der Wickelform 700. Auf die Wickelform 700, welche beispielsweise mittels eines Lagers 710 auf einem Fundament 400 gelagert ist, kann durch Drehen der Wickelform 700 in faserverdunkelndem Material aufgewickelt werden.

Das Verbindungselement 600 weist ein erstes Ende 611 und ein zweites Ende 621 auf. Ferner weist das Verbindungselement 600 einen ersten Abschnitt 610 im Bereich des ersten Endes 611 und einen zweiten Abschnitt 620 im Bereich des zweiten Abschnittes 610, 620 auf. Zwischen diesen beiden Abschnitten 610, 620 ist ein mittlerer Abschnitt 630 vorgesehen.

Um eine glatte Oberfläche des ersten Abschnittes 610 zu erreichen, kann eine Stahlform 500 beispielsweise auf Rädern 520 vorgesehen sein. Die Stahlform 500 weist einen Innendurchmesser 510 auf, welcher sich zu einem geschlossenen Ende 530 verengt. Nachdem das Verbindungselement 600 gewickelt worden ist und bevor das Material ausgehärtet ist, wird die Stahlform 500 auf das erste Ende 610 aufgeschoben, so dass die Innenseiten der Stahlform an den ersten Abschnitt 610 anliegen. Dadurch kann der Außenbereich des ersten Abschnittes 610 sehr glatt hergestellt werden.

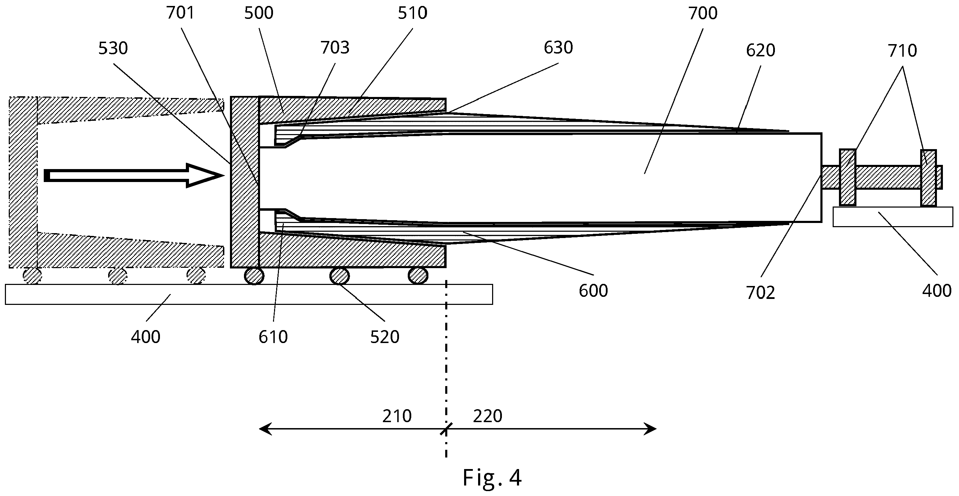

Fig. 4 zeigt eine schematische Schnittansicht eines Verbindungselementes während seiner Herstellung. In Fig. 4 ist zu sehen, wie die Stahlform 500 auf den ersten Abschnitt 610 des Verbindungselementes 600 aufgeschoben worden ist, während sich das Wickelmaterial des Verbindungselementes 600 noch auf der Wickelform 700 befindet.

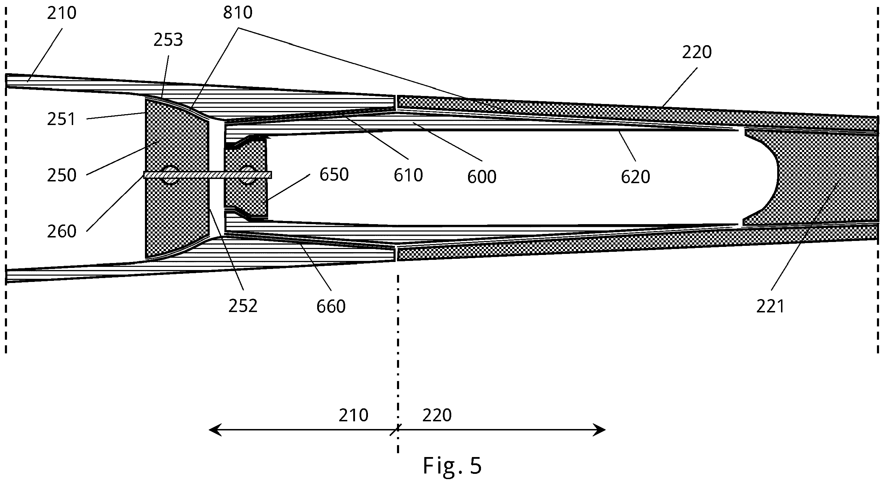

Fig. 5 zeigt eine schematische Schnittansicht eines Ausschnitts eines Windenergieanlagen-Rotorblattes. In Fig. 5 ist insbesondere eine Blatttrennstelle zwischen dem Innenblattabschnitt 210 und dem Außenblattabschnitt 220 gezeigt. Die Verbindung zwischen dem Innenblattabschnitt 210 und dem Außenblattabschnitt 220 erfolgt über die Verbindungseinheit 600. Die Verbindungseinheit 600 weist einen ersten Abschnitt 610 auf, der wie in den Figuren 3 und 4 beschrieben hergestellt worden ist und vorzugsweise eine glatte Oberfläche aufweist. Der erste Abschnitt 610 wird in die Hülse 212 des Innenblattabschnittes 210 eingeführt.

Das Verbindungselement 600 kann einen eingeklebten Steg 650 aufweisen. Im Bereich der Verdickung- bzw. der Hinterschneidung 213 kann ein weiterer Steg 250 eingeklebt werden. Die beiden Stege 650, 250 können mittels eines Querbolzens 260 aneinander befestigt bzw. verschraubt werden. Der zweite Abschnitt 620 der Verbindungseinheit wird in ein offenes Ende des Außenblattes 220 hineingeschoben und vorzugsweise mittels eines Klebers 810 verklebt.

Im Bereich der Hülse kann optimal eine Gleitbeschichtung 660 vorgesehen sein. Das erste Ende des Verbindungselementes kann somit in den Hülsenabschnitt 212 eingeschoben werden und mittels der Stege 250, 650 und des Querbolzens 260 befestigt werden.

Damit kann eine reversible Befestigungsmöglichkeit des Innenblattabschnittes und des Außenblattabschnittes erreicht werden.

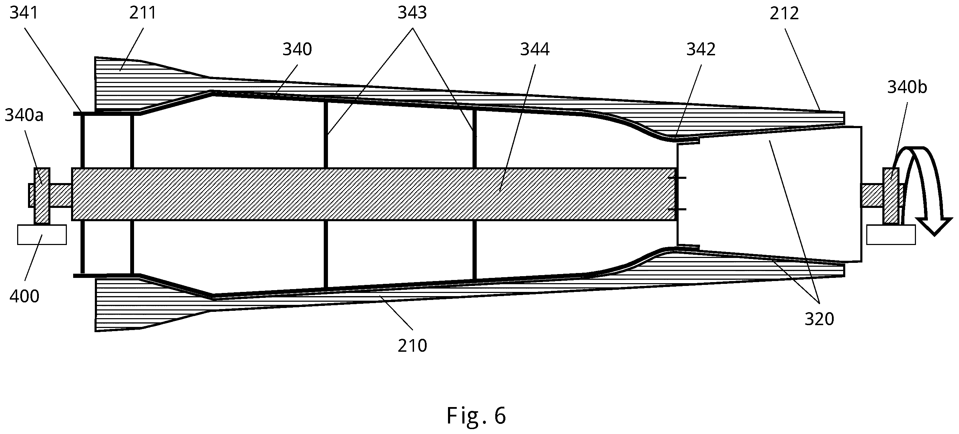

Fig. 6 zeigt eine schematische Schnittansicht eines Innenblattabschnittes während seiner Herstellung. In Figur 6 ist eine alternative Wickelform 340 zu der Wickelform von Fig. 2 gezeigt. Während die Wickelform von Fig. 2 aus Stahl besteht, besteht die Wickelform 340 gemäß Fig. 6 beispielsweise aus einem Faserverbundmaterial. Die Wickelform 340 muss nicht aus dem Innenblattabschnitt entfernt werden, sondern kann darin verbleiben. Damit stellt die Wickelform 340 eine verlorene Wickelform dar, weil sie in dem Innenblattabschnitt verbleibt.

Die Wickelform 340 weist ein erstes Ende 341 und ein zweites Ende 342, sowie einen Stahlanschluss 344 auf, über welchen die Wickelform mit einem Lager 340a verbunden ist. Das Lager 340a kann auf einem Fundament 400 vorgesehen sein. Die Wickelform 340 kann beispielsweise eine Mehrzahl von Queraussteifungen 343 aufweisen. Dadurch dass die Wickelform 340 nicht aus dem Blattabschnitt entfernt werden muss, kann das erste Ende 211 des Innenblattabschnittes 210 breiter ausgestellt sein, so dass eine Flanschaufdickung beispielsweise für Querbolzenverbindungen vorgesehen werden kann. Das Material des Innenblattabschnittes 210 kann auf die Wickelform 340 aufgewickelt werden. Die Wickelform 340 kann beispielsweise über eine Schraubverbindung mit einer zweiten Wickelform 320 gekoppelt sein. Diese zweite Wickelform 320 entspricht dabei der Wickelform 320 gemäß Fig. 2. Durch diese Wickelform soll insbesondere eine Hülsenform des Innenblattes hergestellt werden. Nachdem der Innenblattabschnitt 210 hergestellt worden ist, kann die zweite Hülsenform 320 durch Lösen der Schraubverbindungen herausgenommen werden. Optional kann der Stahlanschluss 344 in der Wickelform 340 verbleiben oder entfernt werden.

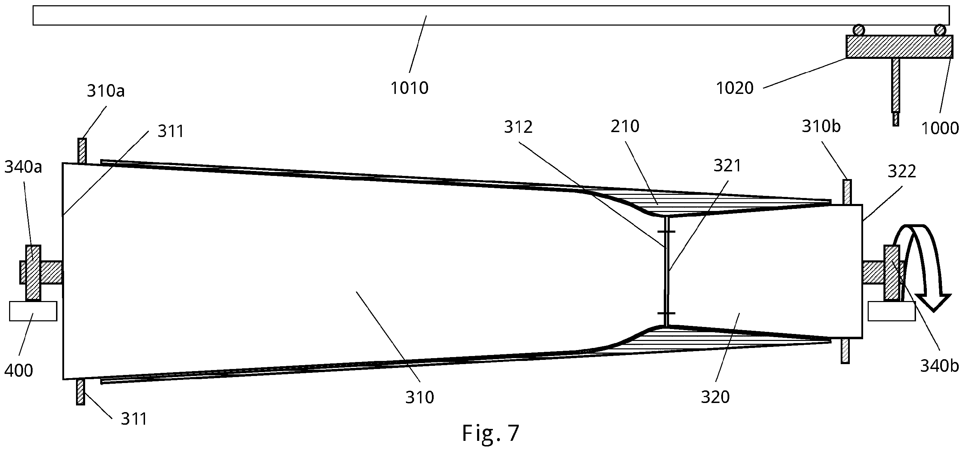

Fig. 7 zeigt eine schematische Schnittansicht eines Innenblattabschnittes während seiner Herstellung. In Fig. 7 ist insbesondere gezeigt, wie das Material auf die Wickelform 310, 320 aufgewickelt wird. Optional kann die Wickelform 310 über Stehbolzen 310a und die zweite Wickelform 320 kann über Stehlbolzen 310b verfügen. Gemäß der Erfindung kann somit ein Wickellaminat auf die Wickelform aufgebracht werden.

Nachdem eine erste Schicht von Wickellaminat auf der Wickelform aufgebracht worden ist, kann mindestens eine Schicht aus unidirektionalen UD Rovingen aufgebracht werden. Hierbei können die Rovinge um die Stehbolzen 310a, 310b herum aufgebracht werden.

Optional kann die Außenseite der ersten Wickellaminatschicht im Wesentlichen geradeaus gestaltet sein, so dass die unidirektionale UD Rovinge hierauf einfach platziert werden können.

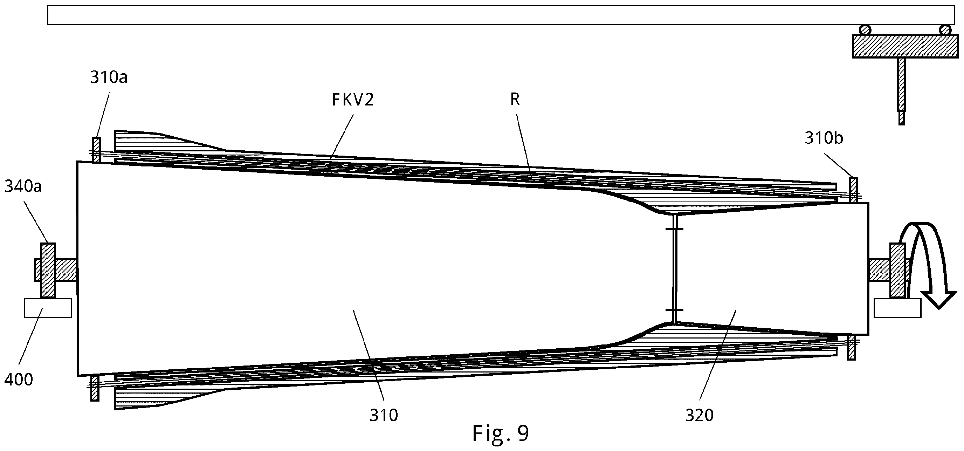

Fig. 9 zeigt eine schematische Schnittansicht eines Innenblattabschnittes während seiner Herstellung,

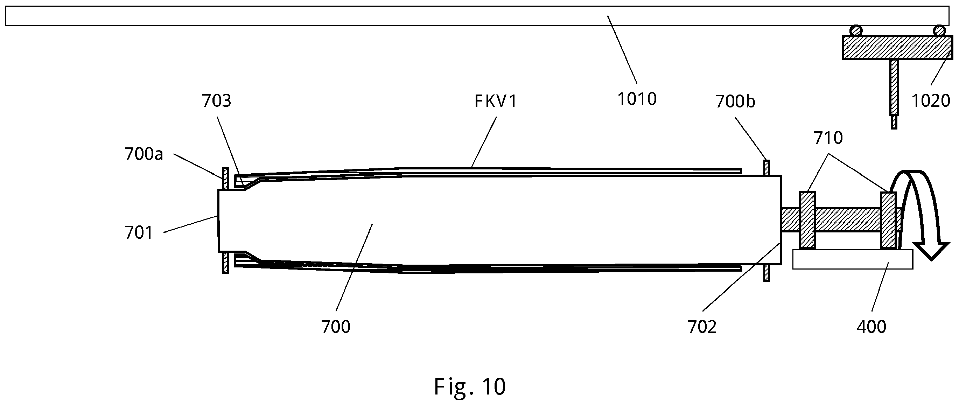

Fig. 10 zeigt eine schematische Schnittansicht des Verbindungselementes während seiner Herstellung.

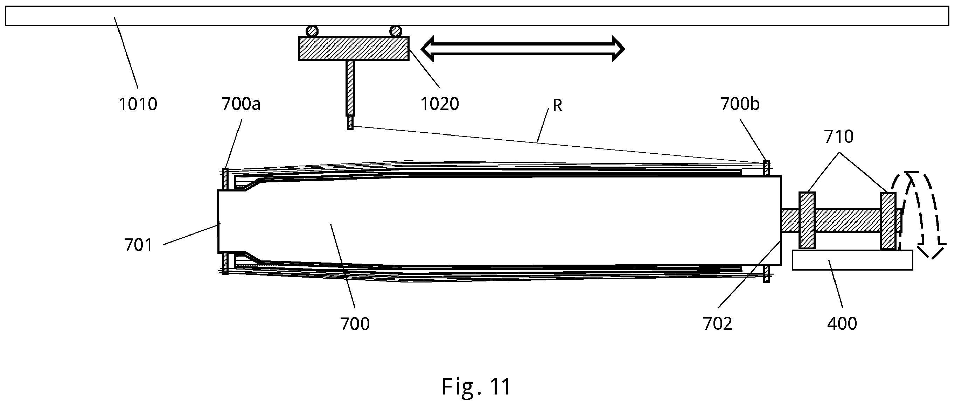

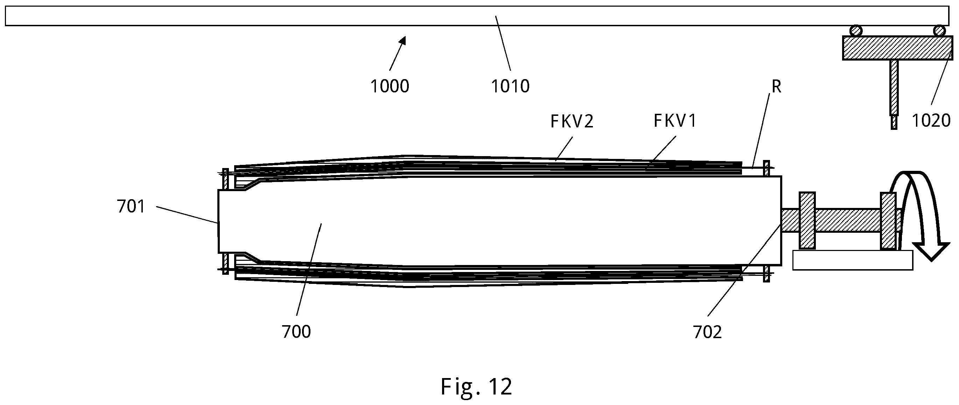

In Fig. 10 bis 12 ist insbesondere die Herstellung des Verbindungselementes 600 gezeigt. Eine erste Schicht von Wickellaminat FKW1 wird auf die Wickelform 700 aufgetragen, so dass an der Außenseite eine Gerade vorgesehen ist. Hierdrauf können unidirektionale UD Rovinge mittels der Rovinge vorgesehen sein. Insbesondere können die Rovinge um die Stehbolzen 700a, 700b herumgewickelt werden. Anschließend kann eine zweite Schicht von Wickellaminat FKV aufgetragen werden.

## Patentansprüche

1. Verfahren zum Herstellen eines Windenergieanlagen-Rotorblattes, welches mindestens einen Innenblattabschnitt (210) und mindestens einen Außenblattabschnitt (220) sowie ein Verbindungselement (600) zum Verbinden des mindestens einen Innenblattabschnitts (210) und des mindestens einen Außenblattabschnitts (220) aufweist, mit den Schritten:
Wickeln des Innenblattabschnittes (210) auf einer Wickelform (310), welche einen ersten und zweiten Wickelabschnitt (310, 320) aufweist, wobei der erste und zweite Wickelabschnitt (310, 320) aneinander befestigt ist,
wobei der zweite Wickelabschnitt (320) konisch ausgestaltet ist, so dass nach dem Wickeln des Innenblattabschnittes (210) eine Hülse an einem Ende des Innenblattabschnittes (210) entsteht, und
Wickeln des Verbindungselementes (600) zum Verbinden des Innenblattabschnittes (210) und des Außenblattabschnittes (220) auf einer Wickelform (700),
wobei das Verbindungselement (600) einen ersten und zweiten Abschnitt (610, 620) aufweist;
wobei eine Form (500) mit einer konischen Innenform auf den ersten Abschnitt des Verbindungselementes (600) aufgeschoben wird, bevor das Wickellaminat ausgehärtet ist, um einen konisch ausgestalteten ersten Abschnitt (610) mit einer glatten Oberfläche vorzusehen.

2. Verfahren nach Anspruch 1, wobei
der mindestens eine Innenblattabschnitt (210) und der mindestens eine Außenblattabschnitt (220) über das Verbindungselement (600) miteinander verklebt oder miteinander lösbar verbunden werden.

3. Windenergieanlagen-Rotorblatt (200), mit
mindestens einem Innenblattabschnitt (210),
mindestens einem Außenblattabschnitt (220), und
einem Verbindungselement (600) zum Verbinden des Innenblattabschnittes (210) mit dem Außenblattabschnitt (220),
wobei der Innenblattabschnitt (210) eine Hülse (216) an einem ersten Ende aufweist, welche durch Wickeln des Innenblattabschnittes (210) erreicht wird,
wobei der mindestens eine Innenblattabschnitt (210) und mindestens eine Außenblattabschnitt (220) lösbar miteinander befestigt sind, so dass der Innenblattabschnitt (210) über das Verbindungselement (600) an dem Außenblattabschnitt (220) befestigt ist,
wobei der Innenblattabschnitt (210) mindestens einen eingeklebten ersten Steg (250) aufweist,
wobei das Verbindungselement (600) mit seinem ersten Ende (260), welches einen zweiten eingeklebten Steg (650) aufweist, in die Hülsen (216) des Innenblattabschnittes eingeführt wird,
wobei das zweite Ende (620) des Verbindungselementes (600) in einem ersten Ende eines Außenblattabschnitts (220) eingeklebt ist.

## Claims

1. A method of producing a wind turbine rotor blade which has at least one inner blade portion (210) and at least one outer blade portion (220) and a connecting element (600) for connecting the at least one inner blade portion (210) and the at least one outer blade portion (220), comprising the steps:
winding the inner blade portion (210) on a winding form (310) having a first and a second winding portion (310, 320), wherein the first and second winding portions (310, 320) are fixed to each other,
wherein the second winding portion (220) is of a conical configuration so that after winding of the inner blade portion (210) a sleeve is produced at an end of the inner blade portion (210),
winding the connecting element (600) for connecting the inner blade portion (210) and the outer blade portion (220) on a winding form (700),
wherein the connecting element (600) has a first and a second portion (610, 620),
wherein a form (500) having a conical shape is pushed on to the first portion of the connecting element (600) before the winding laminate is hardened in order to provide a first portion (610) of a conical configuration and having a smooth surface.

2. A method according to claim 1 wherein
the at least one inner blade portion (210) and the at least one outer blade portion (220) are releasably connected together or adhesively bonded together by way of the connecting element (600).

3. A wind turbine rotor blade (200) comprising
at least one inner blade portion (210),
at least one outer blade portion (220), and
a connecting element (600) for connecting the inner blade portion (210) and the outer blade portion (220),
wherein the inner blade portion (210) has a sleeve (216) at a first end, which is achieved by winding of the inner blade portion (210),
wherein the at least one inner blade portion (210) and at least one outer blade portion (220) are releasably fixed together so that the inner blade portion (210) is fixed to the outer blade portion (220) by way of the connecting element (600),
wherein the inner blade portion (210) has at least one first web (250) which is glued in,
wherein the connecting element (600) is introduced into the sleeves (216) of the inner blade portion with its first end (260) which has a second web (650) which is glued in,
wherein the second end (620) of the connecting element (600) is glued in a first end of an outer blade portion (220).

## Revendications

1. Procédé de fabrication d'une pale de rotor d'éolienne, qui comprend au moins un secteur de pale interne (210) et au moins un secteur de pale externe (220) ainsi qu'un élément de liaison (600) pour la liaison de l'au moins un secteur de pale interne (210) et de l'au moins un secteur de pale externe (220), comprenant les étapes suivantes :
enroulement du secteur de pale interne (210) sur une forme d'enroulement (310) qui comprend un premier et un second secteur d'enroulement (310, 320), dans lequel le premier et le second secteur d'enroulement (310, 320) sont attachés l'un à l'autre,
dans lequel le second secteur d'enroulement (320) est conçu de forme conique de sorte que, après l'enroulement du secteur de pale interne (210), un manchon est réalisé à une extrémité du secteur de pale interne (210), et
enroulement de l'élément de liaison (600) pour la liaison du secteur de pale interne (210) et du secteur de pale externe (220) sur un gabarit d'enroulement (700),
dans lequel l'élément de liaison (600) comprend un premier et un second secteur (610, 620) ;
dans lequel une forme (500) avec une forme interne conique est poussée sur le premier secteur de l'élément de liaison (600) avant que le stratifié d'enroulement soit durci, pour prévoir un premier secteur (610) conçu de manière conique (610) avec une surface lisse.

2. Procédé selon la revendication 1, dans lequel
l'au moins un secteur de pale interne (210) et l'au moins un secteur de pale externe (220) sont collés l'un avec l'autre par le biais de l'élément de liaison (600) ou reliés de manière détachable l'un à l'autre.

3. Pale de rotor d'éolienne (200), avec
au moins un secteur de pale interne (210),
au moins un secteur de pale externe (220), et
un élément de liaison (600) pour la liaison du secteur de pale interne (210) avec le secteur de pale externe (220),
dans lequel le secteur de pale interne (210) comprend un manchon (216) à une première extrémité, qui est obtenu par l'enroulement du secteur de pale interne (210),
dans lequel l'au moins un secteur de pale interne (210) et l'au moins un secteur de pale externe (220) sont fixés de manière détachable l'un à l'autre de sorte que le secteur de pale interne (210) est fixé par le biais de l'élément de liaison (600) au secteur de pale externe (220),
dans lequel le secteur de pale interne (210) comprend au moins un premier cloisonnement collé (250),
dans lequel l'élément de liaison (600) est introduit avec sa première extrémité (260), qui comprend un second cloisonnement collé (650), dans les manchons (216) du secteur de pale interne,
dans lequel la seconde extrémité (620) de l'élément de liaison (600) est collée dans une première extrémité d'un secteur de pale externe (220).
